# EUROPÄISCHE PATENTSCHRIFT

(11) **EP 2 086 788 B1**
(45) Veröffentlichungstag und Bekanntmachung des Hinweises auf die Patenterteilung: **15.01.2020**
(21) Anmeldenummer: 07819313.3
(22) Anmeldetag: 25.10.2007
(51) Int. Cl.: B60L 7/22, H02P 3/22, B60L 7/06, B60L 7/14

(54) **VERFAHREN ZUM GENERATORISCHEN BREMSEN EINES SCHIENENFAHRZEUGS MIT UNTERLEGTEM PASSIVEM ERSATZBREMSKREIS UND VORRICHTUNG ZUR AUSFÜHRUNG DES VERFAHRENS**
METHOD FOR THE GENERATIVE BRAKING OF A RAIL VEHICLE COMPRISING A SUBJACENT PASSIVE BACKUP BRAKE CIRCUIT, AND DEVICE FOR CARRYING OUT SAID METHOD
PROCÉDÉ POUR FAIRE FREINER DE MANIÈRE GÉNÉRATIVE UN VÉHICULE À RAIL COMPRENANT UN CIRCUIT DE FREINAGE DE REMPLACEMENT, PASSIF ET SOUS-JACENT, ET DISPOSITIF PERMETTANT LA MISE EN OEUVRE DU PROCÉDÉ

(30) Priorität: 31.10.2006 DE 102006051317
(43) Veröffentlichungstag der Anmeldung: 12.08.2009
(73) Patentinhaber: KNORR-BREMSE Systeme für Schienenfahrzeuge GmbH, 80809 München (DE)
(72) Erfinder: FRIESEN, Ulf, 85579 Neubiberg (DE)
(74) Vertreter: Mattusch, Gundula
(86) Internationale Anmeldenummer: PCT/EP2007/009261
(87) Internationale Veröffentlichungsnummer: WO 2008/052696

(56) Entgegenhaltungen:
- WO-A-03/050940
- DE-A1-102004 032 680
- DE-U1-202006 012 200
- JP-A- H08 149 870
- US-A- 6 062 657

## Beschreibung

Die Erfindung geht aus von einem Verfahren zum Antreiben und generatorischen Bremsen eines Schienenfahrzeugs gemäß dem Oberbegriff von Patentanspruch 1. Weiterhin betrifft die Erfindung auch eine Vorrichtung zum Antreiben und generatorischen Bremsen eines Schienenfahrzeugs nach dem Oberbegriff von Patentanspruch 4.

Ziel in der Ausrüstung von Schienenfahrzeugen ist es, immer effektivere und leichtere Antriebsmaschinen einzusetzen. Als Standardantriebsmaschine wird heute die umrichtergespeiste Asynchronmaschine verwendet. Diese Maschine bietet aber wenig Potential zur Weiterentwicklung in Bezug auf Masseverringerung und Drehmomentdichte und bedingt in ihrer Anwendung bei Schienenfahrzeugen meist ein Getriebe. Deswegen sind derzeit immer mehr Bestrebungen zu erkennen, permanenterregte Synchronmaschinen als Fahrzeugantriebe zu entwickeln und einzusetzen. Diese Maschinenart ermöglicht durch ihre hohe Drehmomentdichte die Realisierung von Direktantrieben und erzielt vor allem durch den Entfall des Getriebes eine sehr hohe Reduzierung der Masse des Antriebsstrangs.

Die permanent erregte Synchronmaschine weist auf Grund ihrer permanenten Erregung einige Besonderheiten im Vergleich zur Asynchrontechnik auf. So ist es z.B. möglich, bei einer rotierenden Maschine zusätzlich zum umrichtergeregelten Generatorbetrieb mit rein passiven Bauteilen eine Bremswirkung zu erzielen. Die durch eine permanent erregte Synchronmaschine erzeugte Bremswirkung durch eine Beschaltung von Bremswiderständen ist aus der gattungsbildenden DE 101 60 612 A1 bekannt.

US 6 062 657 A beschreibt ein System und ein Verfahren zum Bremsen eines Fahrzeugs mit mindestens zwei Bremssätzen, die dazu bestimmt sind, Bremskräfte für eine Verzögerungsrate als Reaktion auf eine Bremskraftanforderung zu liefern, wobei jeder Bremssatz eine überschüssige verfügbare Bremsung aufweist. Fällt ein Bremssatz aus oder wird er nicht verfügbar, so kann der in dem anderen Bremssatz verfügbare Überschuss zur Deckung dieses Defizits genutzt werden, um dem Fahrzeug die gewünschte Bremsleistung zur Verfügung zu stellen.

Um die Bremszeit eines Synchronmotors im Notfall weitgehend zu verringern, offenbart JP H08 149870A, dass der Steuerstromkreis mit dynamischer Bremsung in den Bremsstromkreis geschaltet wird, wenn die Motorströme nicht konstant gemacht werden können.

Bei der Aufschaltung der rotierenden permanent erregten Synchronmaschine mit Bremswiderständen ergibt sich in Abhängigkeit von der Drehzahl des Synchronmotors und damit auch von der Fahrzeuggeschwindigkeit eine charakteristische Momenten- bzw. Kraftkennlinie, die im Weiteren auch als natürliche Bremskennlinie bezeichnet wird. Diese Bremskennlinie besitzt im Verlauf über der Drehzahl/Geschwindigkeit ein Maximum.

Durch den unterschiedlichen Beladungszustand eines Fahrzeuges (z.B. Anzahl der Fahrgäste) wird eine lastabhängige Regelung der Bremskraft, auch Lastkorrektur genannt, erforderlich, damit eine möglichst konstante Verzögerung erreicht wird. Wird die Bremskraft so eingestellt, dass im leeren Zustand eine hohe Verzögerungsleistung erreicht wird, würde ohne Lastkorrektur das Fahrzeug im vollen Zustand eine wesentlich kleinere Verzögerung und im Extremfall einen zu langen Bremsweg aufweisen. Im umgekehrten Fall einer Einstellung einer sehr hohen Bremskraft für den maximal beladenen Zustand ergibt sich ohne Lastkorrektur im leeren Zustand schnell ein Überbremsen des Fahrzeuges. Dabei würde die zulässige Kraftschlussausnutzung durch die großen Bremskräfte überschritten. Schlechte Kraftschlussbeiwerte können zu einem hohen Schlupf der gebremsten Achsen und damit zu einer hohen Erwärmung/Verschleiß der Räder führen. Dies könnte eine Verringerung der Bremswirkung und damit eine Verlängerung des Bremsweges zur Folge haben. Dies macht sich vor allem bei Fahrzeugen mit einer großen Differenz zwischen leerem und voll beladenem Fahrzeug bemerkbar.

Betriebsbremsungen, insbesondere bei Nahverkehrsfahrzeugen wie U- oder S-Bahnen werden deshalb vorzugsweise mit der verschleißfreien elektrodynamischen Bremse durchgeführt. Durch eine komplexe elektronische Steuerung mittels des Traktionsstromrichters lasst sich ein sehr gutes Bremsverhalten mit Komfortfunktionen darstellen (Lastkorrektur, Gleitschutzregelung, Ruckbegrenzung, Bremskraftmanagement, usw.).

Unter einer Sicherheits- oder Notbremse wird in der Regel ein weiterer Bremskreis verstanden, welcher durch den Fahrer des Schienenfahrzeugs für Schnellbremsungen im Notfall ausgelöst wird oder welcher als unterlegte Sicherheitsebene für den vorrangigen Betriebsbremskreis dient, wenn dieser aufgrund einer Störung ausfällt. Die Not- oder Sicherheitsbremse wird in der Regel über eine elektrische Sicherheitsschleife ausgelöst, wenn der Fahrer einen Notknopf im Führerhaus betätigt oder auch automatisch. Aufgrund ihrer Komplexität und der daraus resultierenden reduzierten Verfügbarkeit geht man davon aus, dass eine elektrodynamische Bremse als Sicherheits- oder Notbremse nicht geeignet ist.

Aus diesem Grund wird in vielen Fällen in heutigen Schienenfahrzeugen die Sicherheits- oder Notbremse durch eine zusätzliche pneumatische Reibungsbremse dargestellt. Dabei ist sowohl eine Lastkorrektur als auch eine Gleitschutzregelung Stand der Technik. Die Lastkorrektur kann unabhängig von einer elektronischen Bremssteuerung rein pneumatisch erfolgen. Bei Fahrzeugen mit Luftfedern wird z.B. der Luftfederdruck als Steuerdruck für die lastabhängige Korrektur des Bremsdruckes benutzt. Dabei erfolgt eine stufige oder besser noch kontinuierliche Anpassung der Bremsleistung an die Fahrzeugmasse. Die Gleitschutzregelung erfolgt über Gleitschutzventile mit einer speziellen elektronischen Ansteuerung.

Weil die beiden Bremskreise, einerseits der Betriebsbremskreis und andererseits der Bremskreis für die Not- oder Sicherheitsbremse mit unterschiedlichen Bremsmedien und unterschiedlichen Bremsaktoren mit jeweils eigenen Komfortfunktionen ausgeführt sind, ergibt sich jedoch ein sehr teures und komplex aufgebautes Bremssystem.

Der Erfindung liegt die Aufgabe zugrunde, ein Verfahren und eine Vorrichtung der eingangs erwähnten Art derart weiter zu bilden, dass so lange wie möglich ein gewisser Mindestbremskomfort bei zugleich hoher Ausfallsicherheit erhalten wird.

Erfindungsgemäß wird diese Aufgabe durch die Merkmale von Patentanspruch 1 und von Patentanspruch 4 gelöst.

### Vorteile der Erfindung

Der grundsätzliche Erfindungsgedanke besteht darin, dass zum Bremsen mit Komfortfunktionen wie Gleitschutz- und/oder Lastregelung der permanent erregte Synchronmotor dem Traktionsstromrichter zugeschaltet wird und dieser erste Schaltzustand solange erhalten bleibt, bis im Laufe der Bremsung eine Störung wie eine unzureichende Bremskraft detektiert und erst dann der zweite Schaltzustand herbeigeführt wird, in dem der permanent erregte Synchronmotor der Lastschaltung zugeschaltet ist. Vorteilhaft ist hierbei insbesondere, dass so lange es geht mit allen Komfortfunktionen wie Gleitschutzregelung, Lastkorrektur etc. gebremst wird.

Darüber hinaus wird der Nachteil der geregelten generatorischen Bremse kompensiert, aufgrund der Komplexität der Regelungsfunktionen eine reduzierte Verfügbarkeit aufzuweisen. Denn durch eine entsprechende Überwachung wird sofort auf den passiven Ersatzbremskreis umgeschaltet, wenn eine Störung im übergeordneten Bremskreis vorliegt, so dass keine Gefahr des Bremskraftausfalls besteht. Zum anderen ist die Verfügbarkeit des Ersatzbremskreises höher, da keine Komfortfunktionen wie Gleitschutz- und/oder Lastregelung mehr vorhanden sind, sondern lediglich eine einfache Lastschaltung mit passiven Bauelementen wie Widerständen, Induktivitäten und/oder Kapazitäten.

Zur Realisierung des Verfahrens reicht es aus, für beide Bremskreise, d.h. für den vorrangigen gleitschutzgeregelten bzw. lastkorrigierten Bremskreis und für den passiven Ersatzbremskreis einen einzigen gemeinsamen permanent erregten Synchronmotor als Bremsgenerator vorzusehen, der bevorzugt dem Traktionsstromrichter zugeschaltet wird und bleibt, um eine generatorische Bremsung mit Komfortfunktionen wie Gleitschutz- und/oder Lastgeregelung zu ermöglichen. Erst im Störungsfall wird auf den wesentlich einfacher aufgebauten passiven Ersatzbremskreis umgeschaltet.

Das Einsteuern der Bremskraft wird dabei durch eine Überwachungseinrichtung überwacht. Die Überwachungseinrichtung bewertet die eingesteuerte Bremskraft durch Messung relevanter physikalischer Größen, wie beispielsweise Bremskraft, Strom und Spannung. Diese Werte bzw. in der Überwachungseinrichtung hieraus abgeleitete Wert für die Bremskraft werden beispielsweise in Bezug auf ihre Höhe und ihren zeitlichen Verlauf überwacht. Bei korrekter Einsteuerung der Bremskraft wird eine Aktivierung des passiven Ersatzbremskreises verhindert.

Stellt die Überwachungseinrichtung jedoch einen Fehler in der eingesteuerten Bremskraft fest, wird auf den passiven Ersatzbremskreis umgeschaltet. Somit ist eine zwar ungeregelte aber sichere Rückfallebene jederzeit gegeben, die die minimalen Anforderungen einer Sicherheits- oder Notbremsung abdeckt.

Die technisch sicherheitsrelevante Auslegung und Ausführung des Verfahrens beschränkt sich damit nur auf die Überwachungseinrichtung. Diese nutzt als Eingangsgrößen das den zweiten Schaltzustand auslösende Signal sowie die gemessenen relevanten physikalischen Größen, wie beispielsweise Bremskraft, Strom und Spannung und steuert abhängig davon als Ausgangsgröße ein Schaltsignal für die Schalteinrichtung aus.

Gegenüber dem Stand der Technik ergibt sich folglich eine erhebliche Ersparnis an Bauteilen und Baugruppen. Mithin kommt in beiden Bremskreisen das gleiche Bremsmedium, nämlich elektrischer Strom sowie ein gemeinsamer Bremsgenerator zum Einsatz, so dass ein zusätzlicher pneumatischer Bremskreis mit Reibungsbremse entfallen kann.

Der erste Schaltzustand wird beispielsweise auch nach Auslösung einer Sicherheits- oder Notbremsung solange erhalten, bis im Laufe der Sicherheits- oder Notbremsung eine Störung wie eine unzureichende Bremskraft detektiert und erst dann der zweite Schaltzustand herbeigeführt, in dem der permanent erregte Synchronmotor der Lastschaltung zugeschaltet ist. Bei Anforderung einer Sicherheits- oder Notbremsung z.B. über eine Sicherheitsschleife des Schienenfahrzeugs oder Schienenfahrzeugzuges wird dann bei intakter elektrodynamischer oder generatorischer Bremse, d.h. das gesamte elektrodynamische Bremssystem mit Steuerung, Leistungselektronik, Motor etc. ist vollständig intakt, weiterhin mit vollem Komfort, d.h. lastkorrigiert und gleitschutzgeregelt gebremst. Dazu wird das die Sicherheits- oder Notbremsung auslösende Signal der Sicherheitsschleife beispielsweise solange zurückgehalten, überschrieben oder unterdrückt, bis die Störung aufgetreten ist, und erst dann zur Schalteinrichtung durchgesteuert, um den zweiten Schaltzustand herbeizuführen.

Dabei wird abhängig von der Höhe und/oder vom zeitlichen Verlauf von wenigstens einer während einer Bremsung vorliegenden elektrischen Größen und/oder von der gemessenen Bremskraft die Beurteilung getroffen, ob eine Störung vorliegt oder nicht. Die Überwachungseinrichtung kann hierzu die elektrische Größe, beispielsweise die an den Klemmen des permanent erregten Synchronmotor anliegende Spannung oder den sie durchfließenden Strom erhalten.

Genauer wird die Beurteilung, ob im Laufe der Bremsung eine Störung vorliegt oder nicht abhängig davon getroffen, ob die während der Bremsung vorliegende wenigstens eine elektrische Größe und/oder die gemessene Bremskraft einen gewissen Schwellwert überschreiten oder nicht.

Durch die in den Unteransprüchen aufgeführten Maßnahmen sind vorteilhafte Weiterbildungen und Verbesserungen der in den unabhängigen Ansprüchen angegebenen Erfindung möglich.

Die genaue Funktionsweise des erfindungsgemäßen Antriebs- und Bremssystems wird anhand der nachfolgenden Beschreibung eines Ausführungsbeispiels klar.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: eine schematische Darstellung eines Traktionsantriebs für ein Wechselstromfahrzeug beinhaltend einen permanent erregten Synchronmotor;
- Fig.2: eine Vorrichtung zum Antreiben und generatorischen Bremsen eines Schienenfahrzeugs gemäß einer bevorzugten Ausführungsform der Erfindung;

### Beschreibung des Ausführungsbeispiels

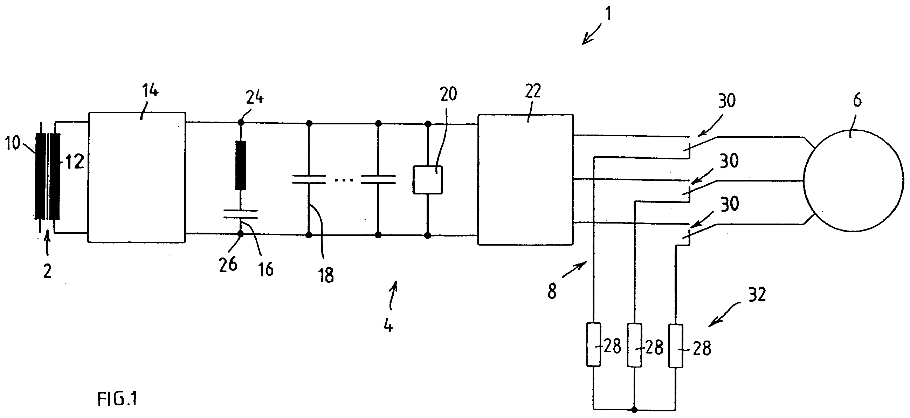

In der Fig.1 ist ein Traktionsantrieb 1 für ein Wechselstromfahrzeug, auch als AC-Schienenfahrzeug bezeichnet, insbesondere für ein Stadtbahnfahrzeug wie eine U- oder S-Bahn näher dargestellt, wobei mit 2 ein Traktionstransformator, mit 4 ein Traktionsstromrichter, mit 6 ein permanenterregter Synchronmotor und mit 8 eine Bremseinrichtung gekennzeichnet sind. Der Traktionstransformator 2 weist eine Primärwicklung 10 und mehrere Sekundärwicklungen 12 auf, von denen hier nur eine Sekundärwicklung 12 dargestellt sind. Der Traktionsstromrichter 4 weist einen Vierquadranten-Steller 14, einen Saugkreis 16, eine Kondensatorbatterie 18, eine Überspannungs-Schutzeinrichtung 20 und einen maschinenseitigen Pulsstromrichter 22 auf. Der Vierquadranten-Steller 14 ist wechselspannungsseitig mit einer Sekundärwicklung 12 des Traktionstransformators 2 verknüpft und gleichspannungsseitig elektrisch parallel geschaltet. Elektrisch parallel zu den beiden gleichspannungsseitigen Anschlüssen 24 und 26 dieser Einspeiseschaltung sind der Saugkreis 16, die Kondensatorbatterie 18, die Überspannungs-Schutzeinrichtung 20 und die gleichspannungsseitigen Eingangsanschlüsse des maschinenseitigen Pulsstromrichters 22 geschaltet. Ausgangsseitig ist der maschinenseitige Pulsstromrichter 22 mit Anschlüssen des permanenterregten Synchronmotors 6 verbindbar.

Die Bremseinrichtung 8 besteht pro Phase des permanenterregten Synchronmotors 6 aus einem Bremswiderstand 28 und einem Umschalter 30. Diese Bremswiderstände 28 sind elektrisch beispielsweise in Stern geschaltet und weisen beispielsweise jeweils einen konstanten Widerstandswert auf. Alternativ ist auch eine Dreieckschaltung denkbar. Die Umschalter 30 sind derartig mit den Ausgängen des maschinenseitigen Pulsstromrichters 22 und den Eingängen des permanenterregten Synchronmotors 6 verknüpft, dass die Eingänge des permanenterregten Synchronmotors 6 einerseits mit dem Bremswiderstand 28 und andererseits mit den Ausgängen des maschinenseitigen Pulsstromrichters 22 verbindbar sind.

Diese Umschalter 30, die auch als Fail-Safe-Schalter bezeichnet werden, können elektrisch oder mechanisch oder pneumatisch betätigt werden. Durch den Umschalter 30 können die Klemmen des permanenterregten Synchronmotors 6 gemäß einer ersten Schaltstellung mit den Ausgängen des maschinenseitigen Pulsstromrichters 22 oder gemäß einer zweiten Schaltstellung mit einer Lastschaltung 32 in Form der vorzugsweise in Stern geschalteten Bremswiderstände 28 verbunden werden.

In der ersten Schaltstellung der Umschalter 30 erzeugt der permanenterregte Synchronmotor 6 ein Bremsmoment, das durch den Traktionsstromrichter 4 geregelt ist, insbesondere hinsichtlich Komfortfunktionen wie Lastkorrektur, Gleitschutzregelung oder Ruckbegrenzung. Mit dieser ersten Schaltstellung wird ein vorrangiger generatorischer Betriebsbremskreis aktiviert. In der zweiten Schaltstellung erzeugt der permanent erregte Synchronmotor 6 ein Bremsmoment, das sich mit der Verringerung der Geschwindigkeit des Schienenfahrzeugs entsprechend dem Verlauf der natürlichen Bremskennlinie verändert. Zur Erzeugung dieses Bremsmoments wird weder der maschinenseitige Pulsstromrichter 22 noch irgend eine Regelung benötigt. Mit dieser zweiten Schaltstellung wird ein nachrangiger passiver Ersatzbremskreis aktiviert.

Neben Widerständen 28 oder anstatt solcher kann die Lastschaltung 32 auch andere passive elektronische Bauelemente wie Kondensatoren und/oder Induktivitäten beispielsweise in Form von Drosselspulen enthalten. Bei einer Parallelschaltung von Widerstand 28 und Kondensator wird beispielsweise das Maximum des Bremsmoments Mₘₐₓ erhöht. Demgegenüber kann durch eine in Reihe zum Widerstand 28 geschaltete Induktivität das Maximum des Bremsmoments Mₘₐₓ des permanent erregten Synchronmotors 6 verringert werden. Generell ist eine Vielzahl von Lastschaltungen 32 denkbar, sei es durch Variation der Widerstands-, Kapazitäts- oder Induktivitätswerte und/oder durch Variation der Verschaltung der einzelnen Bauelemente (parallel oder seriell).

Zum Bremsen mit Komfortfunktionen wie Gleitschutz- und/oder Lastregelung wird der permanent erregte Synchronmotor 6 dem Traktionsstromrichter 4 und einer diesen Traktionsstromrichter 4 steuernden Antriebssteuerung 34 zugeschaltet und dieser erste Schaltzustand solange erhalten, bis im Laufe der Bremsung eine Störung wie eine unzureichende Bremskraft detektiert und erst dann der zweite Schaltzustand herbeigeführt, in dem der permanent erregte Synchronmotor 6 der Lastschaltung 32 zugeschaltet ist.

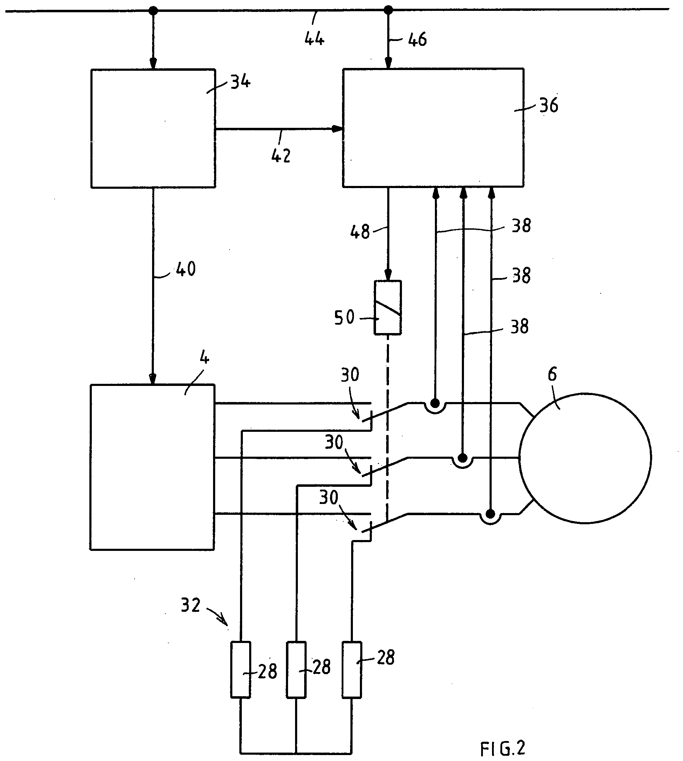

Das Einsteuern der Bremskraft wird dabei durch eine in Fig.2 gezeigte Überwachungseinrichtung 36 überwacht, durch welche der Traktionsantrieb 1 von Fig.1 ergänzt ist. Die Beurteilung, ob genügend Bremskraft aufgebracht wird, erfolgt bevorzugt durch die Messung der Motorströme I. Diese lassen direkt auf das Motormoment M schließen und im relevanten Bremsfall (Anforderung der Sicherheits- oder Notbremse) auf das aufgebrachte Bremsmoment. Es ist natürlich auch möglich, andere relevante physikalische Größen (Messsung der Klemmenspannung U, direkte Kraftmessung usw.) zur Beurteilung des Bremsvermögens heranzuziehen. Durch einfache Kriterien, wie zum Beispiel die Höhe der Bremskraft, einer Zeitüberwachung im Falle des Eingriffes von Gleitschutzregelalgorithmen usw. lässt sich in der Überwachungseinrichtung 36 eine von allen anderen Regel- und Steuereinrichtungen 4, 34 unabhängige Entscheidung treffen, ob für den Sicherheits- oder Notbremsfall mindestens eine für den geforderten Anhalteweg ausreichende Bremskraft aufgebaut wird. Darüber hinaus sind sämtliche Komfortfunktionen und zusätzlichen elektronischen Regelungen noch vorhanden. Im Fehlerfall der elektrodynamischen Bremse erfolgt eine sofortige Umschaltung auf den passiven Ersatzbremskreis bei einer anstehenden Sicherheits- oder Notbremsanforderung. Diese Umschaltung kann unabhängig vom Überwachungsalgorithmus auch durch ein zusätzliches Fehlersignal von der Antriebssteuerung 34 ausgelöst werden, in welcher die Steuer- und Regelroutinen ablaufen, sofern eine Eigendiagnose dieser Einrichtung 34 noch durchgeführt und im Störungsfall noch Fehlersignale erzeugt werden können.

Die Überwachungseinrichtung 36 bewertet die eingesteuerte Bremskraft daher durch Messung relevanter physikalischer Größen, wie beispielsweise einem gemessen Wert für die Bremskraft, einem Strom I und/oder einer Spannung U. Diese Werte bzw. in der Überwachungseinrichtung 36 hieraus abgeleitete Wert für die Bremskraft werden beispielsweise in Bezug auf ihre Höhe und ihren zeitlichen Verlauf überwacht. Hierzu stehen beispielsweise die Klemmen des permanent erregten Synchronmotors 6, durch welche der Motorstrom I als Überwachungsgröße fließt, durch elektrische Leitungen 38 mit der Überwachungseinrichtung 36 in Verbindung. Alternativ oder zusätzlich könnte auch die an den Klemmen des permanent erregten Synchronmotors 6 abfallende Spannung U und/oder die Bremskraft direkt gemessen werden.

Die Beurteilung, ob im Laufe einer Bremsung eine Störung vorliegt oder nicht, wird dann vorzugsweise abhängig davon getroffen, ob eine oder mehrere während der Bremsung gelieferten Größen U, I, welche proportional zur Bremskraft sind und/oder die gemessene Bremskraft selbst einen gewissen Schwellwert überschreiten oder nicht. Bei korrekter Einsteuerung der Bremskraft wird eine Aktivierung des passiven Ersatzbremskreises verhindert. Stellt die Überwachungseinrichtung 36 jedoch einen Fehler in der eingesteuerten Bremskraft fest, wird auf den passiven Ersatzbremskreis umgeschaltet.

Typische Störungsquellen sind dabei beispielsweise ein Ausfall der den Traktionsstromrichter 4 steuernden Antriebssteuerung 34 und/oder des Traktionsstromrichters 4 selbst und/oder einer diese Baugruppen verbindenden elektrischen Verkabelung 40. Falls die Antriebssteuerung 34 und/oder der Traktionsstromrichter 4 über eine Selbstüberwachung verfügen, beispielsweise durch Plausibilitätsprüfungen oder durch Vorsehen von Redundanzen mit gegenseitiger Überwachung, kann ein Fehlersignal auch über eine Signalleitung 42 direkt in die Überwachungseinrichtung 36 eingesteuert werden.

Bevorzugt wird der erste Schaltzustand auch nach Auslösung einer Sicherheits- oder Notbremsung solange erhalten, bis im Laufe der Sicherheits- oder Notbremsung eine Störung wie eine unzureichende Bremskraft detektiert und erst dann der zweite Schaltzustand herbeigeführt, in dem der permanent erregte Synchronmotor 6 der Lastschaltung 32 zugeschaltet ist.

Bei Anforderung einer Sicherheits- oder Notbremsung z.B. über eine Sicherheitsschleife 44 des Schienenfahrzeugs oder Schienenfahrzeugzuges wird dann bei intakter elektrodynamischer oder generatorischer Bremse, d.h. das gesamte elektrodynamische Bremssystem mit Steuerung 34, Leistungselektronik, Motor 6 etc. ist vollständig intakt, weiterhin mit vollem Komfort, d.h. lastkorrigiert und gleitschutzgeregelt gebremst. Dazu wird das die Sicherheits- oder Notbremsung auslösende Signal der Sicherheitsschleife 44, in der Regel ein Spannungsabfall unter eine Grenzspannung, von der Überwachungseinrichtung 36 solange zurückgehalten, überschrieben oder unterdrückt, bis die Störung aufgetreten ist, und von der Überwachungseinrichtung 36 erst dann zu den Umschaltern 30 durchgesteuert, um den zweiten Schaltzustand herbeizuführen. Dazu ist die Überwachungseinrichtung 36 einerseits durch eine Signalleitung 46 mit der Sicherheitsschleife 44 und andererseits durch eine Steuerleitung 48 mit den Umschaltern 30 verbunden, in die bevorzugt ein Schütz oder Fehlerstromschalter 50 geschaltet ist.

Die Funktionen der Überwachungseinrichtung 36 sind daher:
- Einlesen der Anforderung der Sicherheitsbremse,
- Einlesen der physikalischen Größe, aus der die Bremskraft abgeleitet wird (gemessene Bremskraft, Motorstrom I, Spannung U),
- Überschreiben bzw. Unterdrücken der Aktivierung des passiven Bremskreises.

Teile der oder auch die gesamte Überwachungseinrichtung 36 können zur Erfüllung hoher Sicherheitsanforderungen redundant ausgeführt werden. Der Aufbau der Überwachungseinrichtung 36 kann sowohl über eine reine Hardware-Elektronikschaltung, als auch über eine Mikrorechner-Software-Kombination verwirklicht werden. Eine Integration in andere Systeme der Antriebs- und Bremssteuerung zur Nutzung gemeinsamer Schaltungsteile, wie z.B. einer gemeinsamen Stromversorgung ist auch denkbar.

Wenigstens einer Achse des AC-Schienenfahrzeugs ist ein solcher permanenterregter Synchronmotor 6 mit Traktionsstromrichter 4 und den weiteren Bauelementen gemäß Fig.2 zugeordnet.

Die Erfindung ist nicht auf Traktionsantriebe 1 von Fahrzeugen beschränkt, die von einem Wechselstromkreis gespeist werden, sondern kann auch bei Traktionsantrieben von Fahrzeugen mit permanent erregten Synchronmotoren 6 angewendet werden, die von einem Gleichstromnetz gespeist werden, wie sie beispielsweise in der DE 101 60 612 A1 beschrieben sind.

### Bezugszahlenliste

- 1: Traktionsantrieb
- 2: Traktionstransformator
- 4: Traktionsstromrichter
- 6: Synchronmotor
- 8: Bremseinrichtung
- 10: Primärwicklung
- 12: Sekundärwicklung
- 14: Vierquadranten-Steller
- 16: Saugkreis
- 18: Kondensatorbatterie
- 20: Überspannungs-Schutzeinrichtung
- 22: Pulstromrichter
- 24: Anschluss
- 26: Anschluss
- 28: Bremswiderstand
- 30: Umschalter
- 32: Lastschaltung
- 34: Antriebssteuerung
- 36: Überwachungseinrichtung
- 38: Leitung
- 40: Verkabelung
- 42: Signalleitung
- 44: Sicherheitsschleife
- 46: Signalleitung
- 48: Steuerleitung
- 50: Schütz

## Patentansprüche

1. Verfahren zum Antreiben und generatorischen Bremsen eines Schienenfahrzeugs oder eines Schienenfahrzeugzugs beinhaltend einen Traktionsantrieb (1), wobei wenigstens einer Achse des Schienenfahrzeugs oder des Schienenfahrzeugzugs wenigstens ein permanent erregter Synchronmotor (6) und ein Traktionsstromrichter (4) zugeordnet ist und wobei der Traktionsstromrichter (4) wenigstens einen maschinenseitigen Pulsstromrichter (22) aufweist und der permanent erregte Synchronmotor (6) an seinen Klemmen mit einer Schalteinrichtung (30) derart verbunden ist, dass der permanent erregte Synchronmotor (6) gemäß eines ersten Schaltzustands dem Traktionsstromrichter (4) oder gemäß eines zweiten Schaltzustands einer Lastschaltung (32) beinhaltend wenigstens ein Lastelement (28) zugeschaltet wird, **dadurch gekennzeichnet, dass** zum Bremsen mit Komfortfunktionen wie Gleitschutz- und/oder Lastregelung der permanent erregte Synchronmotor (6) dem Traktionsstromrichter (4) zugeschaltet und dieser erste Schaltzustand solange erhalten bleibt, bis im Laufe der Bremsung eine Störung detektiert und erst dann der zweite Schaltzustand herbeigeführt wird, in dem der permanent erregte Synchronmotor (6) der Lastschaltung (32) zugeschaltet ist, wobei abhängig von der Höhe und/oder vom zeitlichen Verlauf von wenigstens einer während der Bremsung vorliegenden elektrischen Größe (U, I) und/oder von der gemessenen Bremskraft die Beurteilung getroffen wird, ob eine Störung vorliegt oder nicht, und wobei die Beurteilung, ob im Laufe der Bremsung eine Störung vorliegt oder nicht abhängig davon getroffen wird, ob die während der Bremsung vorliegende wenigstens eine elektrische Größe (U, I) und/oder die gemessene Bremskraft einen gewissen Schwellwert überschreiten oder nicht.

2. Verfahren nach Anspruch 1, **dadurch gekennzeichnet, dass** der erste Schaltzustand auch nach Auslösung einer Sicherheits- oder Notbremsung solange erhalten bleibt, bis im Laufe der Sicherheits- oder Notbremsung die Störung detektiert und erst dann der zweite Schaltzustand herbeigeführt wird, in dem der permanent erregte Synchronmotor (6) der Lastschaltung (32) zugeschaltet ist.

3. Verfahren nach Anspruch 2, **dadurch gekennzeichnet, dass** ein eine Sicherheits- oder Notbremsung auslösendes Signal einer Sicherheitsschleife (40) des Schienenfahrzeugs oder des Schienenfahrzeugzugs solange zurückgehalten, überschrieben oder unterdrückt wird, bis die Störung aufgetreten ist, und erst dann zur Schalteinrichtung (30) durchgesteuert wird, um den zweiten Schaltzustand herbeizuführen.

4. Vorrichtung zum Antreiben und generatorischen Bremsen eines Schienenfahrzeugs oder eines Schienenfahrzeugzugs beinhaltend einen Traktionsantrieb (1), wobei wenigstens einer Achse des Schienenfahrzeugs oder des Schienenfahrzeugzugs wenigstens ein permanent erregter Synchronmotor (6) und ein Traktionsstromrichter (4) zugeordnet ist und wobei der Traktionsstromrichter (4) wenigstens einen maschinenseitigen Pulsstromrichter (22) aufweist und der permanent erregte Synchronmotor (6) an seinen Klemmen mit einer Schalteinrichtung (30) derart verbunden ist, dass der permanent erregte Synchronmotor (6) gemäß eines ersten Schaltzustands dem Traktionsstromrichter (4) oder gemäß eines zweiten Schaltzustands einer Lastschaltung (32) beinhaltend wenigstens ein Lastelement (28) zugeschaltet wird, **dadurch gekennzeichnet, dass** sie eine Überwachungseinrichtung (36) umfasst, in welche als Eingangsgrößen ein den zweiten Schaltzustand auslösendes Signal und wenigstens eine elektrische Größe (U, I) des permanent erregten Synchronmotors (6) und/oder ein vom Wert der vom permanent erregten Synchronmotor (6) erzeugten Bremskraft abhängiges Signal einlesbar ist und welche abhängig von diesen Signalen als Ausgangsgröße ein Schaltsignal für die Schalteinrichtung (30) aussteuert, wobei die Überwachungseinrichtung (36) derart ausgebildet ist, dass der erste Schaltzustand solange erhalten bleibt, bis im Laufe einer Bremsung eine Störung detektiert und erst dann der zweite Schaltzustand herbeigeführt wird, in dem der permanent erregte Synchronmotor (6) der Lastschaltung (32) zugeschaltet ist, und dass eine Beurteilung, ob eine Störung vorliegt oder nicht abhängig von der Höhe und/oder vom zeitlichen Verlauf der wenigstens einen, während der Bremsung vorliegenden elektrischer Größe (U, I) und/oder von dem Wert der vom permanent erregten Synchronmotor (6) erzeugten Bremskraft getroffen wird, und dass die Beurteilung, ob im Laufe der Bremsung eine Störung vorliegt oder nicht abhängig davon getroffen wird, ob die während der Bremsung vorliegende wenigstens eine elektrische Größe (U, I) und/oder die gemessene Bremskraft einen gewissen Schwellwert überschreiten oder nicht.

5. Vorrichtung nach Anspruch 4, **dadurch gekennzeichnet, dass** die Überwachungseinrichtung (36) redundant ausgeführt ist.

6. Vorrichtung nach Anspruch 4 oder 5, **dadurch gekennzeichnet, dass** die Überwachungseinrichtung (36) hardwarebasiert oder software- und/oder hardwarebasiert ausgeführt ist.

7. Vorrichtung nach wenigstens einem der Ansprüche 4 bis 6, **dadurch gekennzeichnet, dass** die Lastelemente (32) Widerstände (28) und Induktivitäten und/oder Kapazitäten in Reihen- und/oder Parallelschaltung beinhalten.

## Claims

1. A device for driving and regeneratively braking a rail vehicle or rail locomotive vehicle containing a traction drive (1), at least one permanently excited synchronous motor (6) and a traction current converter (4) being assigned to at least one axle of the rail vehicle or rail locomotive vehicle, and the traction current converter (4) having at least one machine-side pulsed current converter (22) and the terminals of the permanently excited synchronous motor (6) being connected to a switchgear assembly (30) in such a manner that the permanently excited synchronous motor (6) is connected to the traction current converter (4) according to a first switching state or to a load circuit (32) containing at least one load element (28) according to a second switching state, **characterised in that** in order to brake with convenience functions such as wheel-slip protection and/or load control the permanently excited synchronous motor (6) is connected to the traction current converter (4) and this first switching state is maintained until a fault is detected during braking, at which point the second switching state is induced by connecting the permanently excited synchronous motor (6) to the load circuit (32), the assessment of whether or not a fault is present being made dependent on the height and/or the time curve of at least one electrical value (U, I) present during braking and/or on the measured braking force, and the assessment of whether or not a fault is present during braking being made dependent on whether or not the at least one electrical value (U, I) present during braking and/or the braking force measured exceeds a certain threshold value.

2. A method according to claim 1, **characterised in that** the first switching state continues to be maintained after safety or emergency braking has been triggered until the fault is detected during safety or emergency braking, at which point the second switching state is induced by connecting the permanently excited synchronous motor (6) to the load circuit (32).

3. A method according to claim 2, **characterised in that** a signal emitted by a safety loop (40) of the rail vehicle or rail locomotive vehicle to trigger safety or emergency braking is withheld, overridden or suppressed until the fault occurs, at which point it is sent to the switching device (30) in order to induce the second switching state.

4. A device for driving and regeneratively braking a rail vehicle or rail locomotive vehicle containing a traction drive (1), at least one permanently excited synchronous motor (6) and a traction current converter (4) being assigned to at least one axle of the rail vehicle or rail locomotive vehicle, and the traction current converter (4) having at least one machine-side pulsed current converter (22) and the terminals of the permanently excited synchronous motor (6) being connected to a switchgear assembly (30) in such a manner that the permanently excited synchronous motor (6) is connected to the traction current converter (4) according to a first switching state or to a load circuit (32) containing at least one load element (28) according to a second switching state, **characterised in that** it comprises a monitoring device (36) into which it is possible to input, as input values, a signal that triggers the second switching state and at least one electrical value (U, I) of the permanently excited synchronous motor (6) and/or a signal dependent on the value of the braking force generated by the permanently excited synchronous motor (6), and which emits, as an output value, a switching signal for the switching device (30) dependent on the aforementioned signals, the monitoring device (36) being designed such that the first switching state is maintained until a fault is detected during braking, at which point the second switching state is induced by connecting the permanently excited synchronous motor (6) to the load circuit (32), and that an assessment if whether or not a fault is present is made dependent on the height and/or the time curve of at least one electrical value (U, I) present during braking and/or on the value of the braking force generated by the permanently excited synchronous motor (6), and that the assessment of whether or not a fault is present during braking is made dependent on whether or not the at least one electrical value (U, I) present during braking and/or the braking force measured exceeds a certain threshold value.

5. A device according to claim 4, **characterised in that** the monitoring device (36) is of redundant design.

6. A device according to claim 4 or 5, **characterised in that** the monitoring device (36) is either hardware-based or hardware- and software-based.

7. A device according to at least one of claims 4 to 6, **characterised in that** the load elements (32) contain resistors (28) and inductors and/or capacitors connected in series and/or in parallel.

## Revendications

1. Procédé d'entraînement et de freinage en génératrice d'un véhicule ferroviaire ou d'un train de véhicule ferroviaire, comportant un entraînement (1) de traction, dans lequel, à au moins un essieu du véhicule ferroviaire ou du train de véhicule ferroviaire, est associé au moins un moteur (6) synchrone à excitation permanente et un convertisseur (4) statique de traction et dans lequel le convertisseur (4) statique de traction a au moins un convertisseur (22) à impulsions et le moteur (6) synchrone à excitation permanente est relié sur ses bornes à un dispositif (30) de commutation, de manière à ce que le moteur (6) synchrone à excitation permanente soit connecté, suivant un premier état de commutation, au convertisseur (4) statique de traction ou, suivant un deuxième état de commutation, à un circuit (32) de charge comportant au moins un élément (28) de charge, **caractérisé en ce que**, pour le freinage avec des fonctions de confort, comme la régulation d'anti-enrayage et/ou la régulation de charge, le moteur (6) synchrone à excitation permanente est connecté au convertisseur (4) statique de traction et ce premier état de commutation reste maintenu jusqu'à ce qu'au cours du freinage une anomalie soit détectée et, seulement alors, on passe au deuxième état de commutation, dans lequel le moteur (6) synchrone à excitation permanente est connecté au circuit (32) de charge, dans lequel, en fonction du niveau et/ou de la courbe en fonction du temps d'au moins une grandeur (U, I) électrique présente pendant le freinage et/ou de la force de freinage mesurée, il est pris la décision qu'une anomalie est présente ou ne l'est pas et dans lequel la décision du point de savoir s'il y a ou non une anomalie au cours du freinage est prise en fonction du point de savoir si la au moins une grandeur (U, I) électrique pendant le freinage et/ou la force de freinage mesurée dépasse ou non une certaine valeur de seuil.

2. Procédé suivant la revendication 1, **caractérisé en ce que** le premier état de commutation reste maintenu, même après le déclenchement d'un freinage de sécurité ou d'urgence, jusqu'à ce que, au cours du freinage de sécurité ou d'urgence, l'anomalie soit détectée et, seulement ensuite, on passe au deuxième état de commutation, dans lequel le moteur (6) synchrone à excitation permanente est connecté au circuit (32) de charge.

3. Procédé suivant la revendication 2, **caractérisé en ce qu'**un signal, déclenchant un freinage de sécurité ou d'urgence, d'une boucle (40) de sécurité du véhicule ferroviaire ou du train de véhicule ferroviaire est retenu, reporté ou supprimé, jusqu'à ce que l'anomalie se produise et, seulement ensuite, est transmis au dispositif (30) de commutation pour provoquer le deuxième état de commutation.

4. Système d'entraînement et de freinage en génératrice d'un véhicule ferroviaire ou d'un train de véhicule ferroviaire, comportant un entraînement (1) de traction, dans lequel, à au moins un essieu du véhicule ferroviaire ou du train de véhicule ferroviaire, est associé au moins un moteur (6) synchrone à excitation permanente et un convertisseur (4) statique de traction et dans lequel le convertisseur (4) statique de traction a au moins un convertisseur (22) à impulsions et le moteur (6) synchrone à excitation permanente est relié sur ses bornes à un dispositif (30) de commutation, de manière à ce que le moteur (6) synchrone à excitation permanente soit connecté, suivant un premier état de commutation, au convertisseur (4) statique de traction ou, suivant un deuxième état de commutation, sur un circuit (32) de charge comportant au moins un élément (28) de charge, **caractérisé en ce qu'**il comprend un dispositif (36) de contrôle, dans lequel peut être entré comme grandeurs d'entrée un signal déclenchant le deuxième état de commutation et au moins une grandeur (U, I) électrique du moteur (6) synchrone à excitation permanente et/ou un signal dépendant de la valeur de la force de freinage produite par le moteur (6) synchrone à excitation permanente et qui, en fonction de ces signaux, commande comme grandeurs de sortie un signal de commutation pour le dispositif (30) de commutation, le dispositif (36) de contrôle étant constitué de manière à ce que le premier état de commutation reste maintenu jusqu'à ce qu'au cours d'un freinage une anomalie soit détectée et, seulement alors, on passe au deuxième état de commutation, dans lequel le moteur (6) synchrone à excitation permanente est connecté au circuit (32) de charge, et **en ce qu'**il est pris une décision sur le point de savoir s'il y a une anomalie ou non en fonction du niveau et/ou de la courbe en fonction du temps de la au moins une grandeur (U, I) électrique présente pendant le freinage et/ou de la valeur de la force de freinage produite par le moteur (6) synchrone à excitation permanente, et **en ce que** la décision du point de savoir si, au cours du freinage, il y a ou non une anomalie est prise en fonction du point de savoir si la au moins une grandeur (U, I) électrique présente pendant le freinage et/ou la force de freinage mesurée dépasse ou non une certaine valeur de seuil.

5. Système suivant la revendication 4, **caractérisé en ce que** le dispositif (36) de contrôle est réalisé de manière redondante.

6. Système suivant la revendication 4 ou 5, **caractérisé en ce que** le dispositif (36) de contrôle est réalisé en matériel ou est réalisé en logiciel et/ou en matériel.

7. Système suivant au moins l'une des revendications 4 à 6, **caractérisé en ce que** les éléments (32) de charge comportent des résistances (28) et des inductances et/ou des capacités en série et/ou en parallèle.
